# FASCICULE DE BREVET EUROPEEN

(11) **EP 0 374 493 B1**
(45) Date de publication et mention de la délivrance du brevet: **10.11.1993**
(21) Numéro de dépôt: 89121357.1
(22) Date de dépôt: 18.11.1989
(51) Int. Cl.: F16K 1/30, F17C 13/12

(54) **Soupape pour bouteilles à gaz**
Gasflaschenventil
Gas bottle valve

(30) Priorité: 23.12.1988 LU 87413
(43) Date de publication de la demande: 27.06.1990
(73) Titulaire: LUXEMBOURG PATENT COMPANY S.A., 1720 Luxembourg (LU)
(72) Inventeur: Kremer, Paul, L-7242 Walferdange (LU)
(74) Mandataire: Meyers, Ernest

(56) Documents cités:
- WO-A-82/03900
- BE-A- 633 979
- DE-A- 2 909 046
- US-A- 4 372 343
- US-A- 4 706 929

## Description

La présente invention concerne une soupape pour bouteilles à gaz, destinée à contenir une pression résiduelle déterminée dans la bouteille et montée dans l'alésage cylindrique d'une tubulure conçue pour être connectée, soit sur un circuit d'utilisation du gaz, soit sur un circuit de rinçage ou de remplissage de la bouteille, ladite soupape comprenant un organe de fermeture qui est sollicité en direction de sa fermeture sur un siège sous l'action d'un ressort et contre l'action de la pression du gaz dans la bouteille.

Quoique n'y étant pas limitée, l'invention vise plus particulièrement des bouteilles contenant des gaz liquéfiés ou comprimés utilisés, par exemple, dans la fabrication de fibres optiques ou dans la technique des semi-conducteurs, notamment pour le dopage de ceux-ci. Ces gaz doivent être d'une pureté quasi absolue, car la moindre impureté, solide, liquide ou gazeuse, aussi microscopique soit-elle, peut perturber le processus de dopage et de fabrication de ces matériaux. En outre, ces gaz peuvent être corrosifs, voire toxiques.

Pour éviter la pénétration d'impuretés dans les bouteilles vides, qui pourraient être difficilement enlevées par un rinçage avant un nouveau remplissage de la bouteille, on évite de vider les bouteilles complètement de manière à y maintenir une pression résiduelle qui empêche la pénétration de telles impuretés. A cet effet, on prévoit dans la tubulure de sortie des bouteilles à gaz une soupape du genre décrit ci-dessus, qui se ferme automatiquement sous l'action de son ressort, lorsque la pression des gaz dans la bouteille tombe en dessous d'une valeur prédéterminée. Toutefois, une telle soupape empêche le rinçage ou le remplissage de la bouteille car ces opérations sont effectuées à travers cette même tubulure et la pression du gaz devant pénétrer dans la bouteille sollicite la soupape dans le sens de sa fermeture. Pour y remédier, on a prévu différents systèmes, plus ou moins compliqués, qui permettent, soit de bloquer cette soupape dans une position ouverte contre l'action de son ressort tel que décrit dans le document DE-A-2909046 qui prévoit un outillage spécial à cet effet, soit de prévoir une soupape à action différentielle, c'est-à-dire que la pression du gaz à l'entrée est transmise sur le côté opposé et que l'on profite de surfaces actives différentes pour déplacer la soupape contre la pression du gaz qui la sollicite.

Le but de la présente invention est de prévoir une soupape de ce genre qui se caractérise par sa simplicité, sa fiabilité et son prix de revient et qui ne contrarie ni le rinçage ni le remplissage d'une bouteille.

Pour atteindre cet objectif, l'invention propose une soupape telle que définie dans la revendication 1.

Autrement dit, en vue du rinçage ou du remplissage de la bouteille, il suffit par une simple manoeuvre manuelle, sans intervention d'outillage, d'extraire toute la soupape et ses accessoires et de libérer complètement la tubulure d'accès à l'intérieur de la bouteille.

L'organe de fermeture est, de préférence conçu sous forme d'un piston, dont la tête est formée par l'organe d'étanchéité et dont le côté opposé est prolongé axialement par une tige à travers le ressort sollicitant le piston.

Ledit élément peut être conçu sous forme de disque pouvant glisser axialement sur la tige de piston et dont la partie périphérique comporte des découpes radiales pour définir des pétales qui sont recourbées dans la direction axiale extérieure pour manifester une flexibilité élastique dans le sens radial.

D'autres particularités et caractéristiques ressortiront de la description détaillée d'un mode de réalisation avantageux, présenté ci-dessous, à titre d'illustration, en référence aux dessins annexés dans lesquels:
La figure 1 représente schématiquement une coupe verticale axiale à travers une soupape selon la présente invention, en position opérative et
La figure 2 une vue analogue de la même soupape en position inopérative avant son dégagement.

La référence 10 sur les figures représente une partie de la tête d'une bouteille à gaz qui comporte un passage principal 12 dans lequel se trouve le robinet non représenté pour l'ouverture et la fermeture de la bouteille. La référence 14 représente une tubulure avec un filet extérieur qui permet la connexion de la bouteille, soit sur un circuit d'utilisation, soit sur un circuit de rinçage ou de remplissage de la bouteille.

Pour éviter que la bouteille à gaz ne soit vidée au-delà d'une pression résiduelle prédéterminée, on prévoit dans l'alésage cylindrique 16 de la tubulure 14 une soupape qui se ferme automatiquement lorsque cette pression est atteinte. Dans le mode de réalisation représenté, cette soupape est constituée par un piston 18 pouvant coulisser axialement dans cet alésage 16 et dont la surface frontale porte une pastille d'étanchéité 20 coopérant avec un siège annulaire 22 autour d'une ouverture communiquant avec le passage principal 12. Le côté du piston 18 opposé à la pastille 20 est prolongé par une tige 24 autour duquel est monté un ressort hélicoïdal 26 qui tend à maintenir le piston 18 sur son siège 22. La force de ce ressort 26 est déterminée de manière à correspondre sensiblement à la force de la pression résiduelle que l'on veut maintenir dans la bouteille et qui agit sur la surface d'étanchéité du piston 18 contre l'action du ressort 26. Lorsque la pression du gaz dans la bouteille est supérieure à cette pression résiduelle, sa force de poussée sur la soupape est suffisante pour la maintenir ouverte contre l'action du ressort 26. Par contre, lorsque la bouteille devient vide et que la pression du gaz tombe en-dessous du seuil de cette pression résiduelle la force du ressort 26 devient supérieure à la poussée du gaz ce qui lui permet de repousser le piston 18 sur son siège 22 et de l'y maintenir.

Pour pourvoir rincer la bouteille et la remplir à travers la tubulure 14, la présente invention prévoit un système simple et efficace pour démonter rapidement toute la soupape. A cet effet, le ressort 26 prend appui, du côté opposé au piston de soupape 18, sur un disque 30 qui est engagé sur la tige 24 et qui peut coulisser axialement par rapport à cette tige 24 et vice versa. Ce disque 30 possède, en section diamétrale, une forme en accolade, c'est-à-dire que son bord central 32 autour de l'ouverture de passage de la tige 24 est recourbé axialement en direction du piston 18 pour assurer un meilleur guidage sur la tige 24, alors que son bord circulaire extérieur 34, après une courbure axiale en direction du piston 18 et recourbé axialement du côté opposé, c'est-à-dire vers l'extérieur de la tubulure 14. Cette forme du disque 30 lui confère une élasticité radiale qui maintient le bord 34 contre la paroi de l'alésage 16. Pour améliorer cette élasticité, le disque 30 présente, en outre, des découpes périphériques qui définissent une série de pétales 36 qui s'appuient élastiquement contre la paroi intérieure de l'alésage 16.

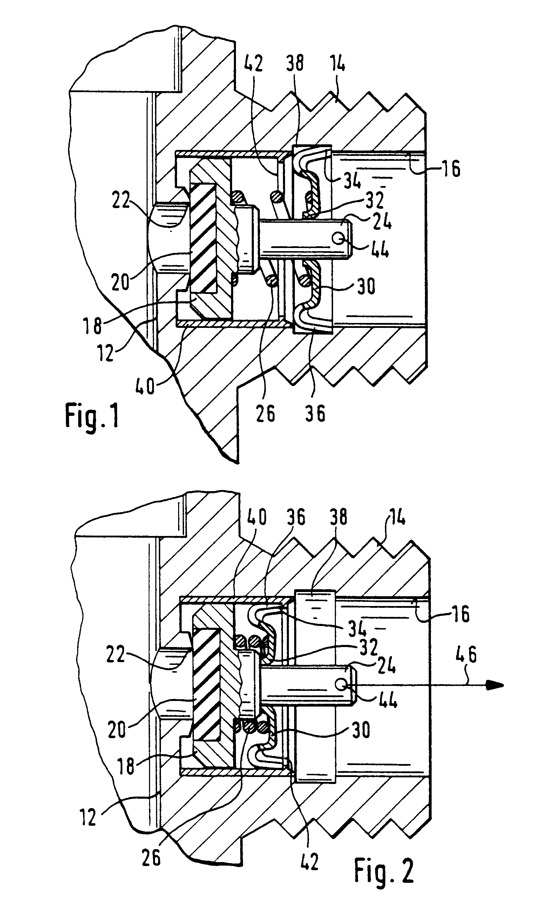

L'alésage 16 de la tubulure 14 présente une rainure circulaire 38 qui définit la position opérative du disque 30. En effet, grâce à l'élasticité radiale des pétales 36 le bord 34 de ceux-ci engagé derrière le bord extérieur de cette rainure 38 comme représenté sur la figure 1. Le disque 30 ne peut donc pas sortir sous l'action de la poussée du ressort 26.

Autour du piston 18 se trouve une douille cylindrique 40 qui est engagée librement, par glissement dans l'alésage 16 et qui s'étend jusqu'au bord intérieur de la rainure 38. Cette douille 40 comporte, du côté de la rainure 38, et du côté intérieur, une nervure circulaire 42 en saillie par rapport à sa surface intérieure. En dehors de sa fonction qu'elle remplit lors du dégagement de la soupape, cette nervure 42 peut servir de butée au piston 18 pour fixer sa position d'ouverture.

Le fonctionnement de la soupape selon la présente invention ressort de la comparaison des figures 1 et 2. La figure 1 montre la soupape en position opérative et en position fermée, ce qui signifie que la pression du gaz dans la bouteille est tombée en-dessous du seuil de la pression résiduelle et que la bouteille est presque vide. Pour pouvoir rincer la bouteille à l'aide d'un gaz inerte et ensuite la remplir à nouveau on démonte simplement la soupape. A cet effet, on enfonce manuellement, ou à l'aide d'une douille le disque 30 contre l'action du ressort 26 en poussant sur sa partie médiane plane. Cet enfoncement du disque 30 est rendu possible grâce à la flexibilité radiale de ses pétales 36 qui lui permettent la pénétration dans la douille 40 et le passage de la nervure 42 jusqu'à ce que le bord 34 soit accroché derrière la nervure 42 comme représenté sur la figure 2. A partir de cette position la soupape peut être dégagée aisément avec la douille 40, dans le sens de la flèche 46 sur la figure 2, soit par simple traction, soit sous l'action de la poussée exercée par la pression résiduelle des gaz si celle-ci est suffisante. Pour éviter que, lors de l'extraction de la soupape, la détente du ressort 26 ne provoque un dégagement total du disque de la tige 24 on peut prévoir sur celle-ci une butée diamétrale 44.

En vue de la mise en place de la soupape, il suffit d'engager celle-ci avec la douille 40 jusqu'à ce qu'elle occupe la position selon la figure 1. Le moment où cette position est atteinte, est facilement perceptible par le déclic qui se produit au moment où les pétales 36 se détendent élastiquement dans la rainure 38.

## Revendications

1. Soupape pour bouteilles à gaz destinée à contenir une pression résiduelle déterminée dans la bouteille et montée dans l'alésage cylindrique (16) d'une tubulure (14) conçue pour être connectée soit sur un circuit d'utilisation du gaz, soit sur un circuit de remplissage ou de rinçage de la bouteille, ladite soupape comprenant un organe de fermeture (18) qui est sollicité en direction de sa fermeture sur un siège (22) contre l'action de la pression du gaz dans la bouteille sous l'action d'un ressort (26) tendu entre l'organe de fermeture (18) et un élément d'appui (30), ledit organe de fermeture étant déplaçable axialement dans ledit alésage (16) contre l'action du ressort (26), caractérisée en ce qu'il est prévu entre la paroi de l'alésage (16) et l'organe de fermeture (18) une douille cylindrique (40) dégageable axialement par coulissement de la tubulure (14), en ce que ledit élément d'appui est en forme de disque (30) présentant une flexibilité élastique dans le sens radial de manière que son bord puisse s'engager élastiquement dans une rainure circulaire (38) prévue dans ledit alésage (16), axialement à l'opposé du siège (22) par rapport à la douille (40) pour maintenir la soupape en position opérative et en ce que ledit élément d'appui (30) est déplaçable axialement, en direction du siège (22) et contre l'action du ressort (26), pour déloger son bord de ladite rainure (38) et l'engager dans ladite douille (40) afin de solidariser celle-ci avec ledit élément d'appui (30) pour permettre le dégagement axial de l'ensemble formé par la douille (46), la soupape et ledit élément d'appui (30).

2. Soupape selon la revendication 1 caractérisée en ce que l'organe de fermeture est conçu sous forme de piston (18) dont la tête est formée par une pastille d'étanchéité (20) et dont le côté opposé est prolongé axialement par une tige (24) à travers le ressort (26) sollicitant le piston (18) et à travers ledit élément.

3. Soupape selon la revendication 1, caractérisée en ce que la douille (40) comporte, du côté de ladite rainure (38), un bord intérieur saillant (42).

4. Soupape selon la revendication 1 ou 2, caracterisée en ce que la partie périphérique dudit élément comporte des découpes radiales pour définir des pétales (36) qui sont recourbées dans la direction axiale extérieure pour manifester une flexibilité élastique dans le sens radial.

5. Soupape selon la revendication 4, caractérisée en ce que le disque (30) comporte une ouverture centrale par laquelle il est engagé sur la tige de piston (24), le bord de cette ouverture étant recourbé axialement dans le sens opposé des pétales (36).

6. Soupape selon la revendication 4, caractérisée en ce que l'extrémité libre de la tige de piston (24) comporte une butée diamétrale s'opposant à la sortie du disque (30) de la tige (24).

## Claims

1. Valve for gas cylinders which is intended to contain a given residual pressure in the cylinder and is mounted in the cylindrical bore (16) of a connection piece (14) designed to be connected either to a circuit for using the gas, or to a circuit for filling or rinsing the cylinder, the said valve comprising a closing member (18) which is urged in the direction of its closure onto a seat (22) counter to the action of the gas in the cylinder under the action of a spring (26) provided between the closing member (18) and a retaining member (30), said closing member being axially displaceable inside said bore (16) counter to the action of the spring, characterized in that a cylindrical bush (40) is provided between the wall of the bore (16) and the closing member (18) said bush (40) being axially removable, by sliding, from the connection piece, in that said retaining member (30) is in the form of a disc (30) having an elastic flexibility in the radial direction so that its peripheral edge may be urged elastically in a circular groove (38) provided in said bore (16) axially opposed to the seat (22) with respect to the bush (40) so as to keep the valve in the operative position and in that the retaining member (30) is displaceable axially towards the seat (22) counter to the action of the spring (26) so as to remove its edge from the groove (38) and engage it in said bush (40) in order to secure the latter to said retaining member (30) to permit the axial disengagement of the bush (40) the valve and the retaining member (30) as a whole.

2. Valve according to Claim 1, characterized in that the closing member is designed in the form of a piston (18), the head of which is formed by a sealing cap (20) and the opposite side of which is extended axially by a rod (24) through the spring (26) urging the piston (18) and through said retaining member.

3. Valve according to Claim 1, characterized in that the bush (40) comprises, on the side of said groove (38), an inner projecting edge (42).

4. Valve according to Claim 1, characterized in that the peripheral part of said retaining member comprises radial undercuts for defining petals (36) which are curved in the outer axial direction so as to exhibit an elastic flexibility in the radial direction.

5. Valve according to Claim 4, characterized in that the disc (30) has a central opening, via which it is engaged on the piston rod (24), the edge of this opening being curved axially in the opposite direction to the petals (36).

6. Valve according to Claim 4, characterized in that the free end of the piston rod (24) has a diametral stop to prevent the disc (30) from coming off the rod (24).

## Patentansprüche

1. Gasflaschenventil zum Einschliessen eines bestimmten Restdrucks in der Flasche, das in einer zylindrischen Bohrung (16) eines Rohrstutzens (14) montiert ist, der so ausgelegt ist, dass er entweder an ein Gasverbrauchernetz angeschlossen werden oder mit einem Nachfüll-oder Spülkreislauf für Gasflaschen verbunden werden kann, wobei das Ventil ein Schliessorgan (18) aufweist , das unter der Wirkung einer zwischen dem Schliessorgan (18) und einer Abstützfläche (30) gespannten Feder (26) gegen den Gasdruck in der Gasflasche in Richtung Schliesstellung auf einen Ventilsitz (22) gedrückt wird und das in der Bohrung (16) axial gegen die Wirkung der Feder (26) bewegbar ist, dadurch gekennzeichnet, dass zwischen der Bohrungswand (16) und dem Schliessorgan (18) eine durch axiale Verschiebung aus dem Rohrstutzen (14) herausziehbare zylindrische Hülse (40) vorgesehen ist, dass die Abstutzfläche die Form einer Scheibe (30) hat, welche radial eine elastische Flexibilität aufweist, so dass ihr Rand sich elastisch in eine in der Bohrung (16) in Bezug auf die Hülse (40) axial gegenüber dem Ventilsitz (22) vorgesehenen Ringnut (23) einlegen kann um das Ventil in Arbeitsstellung zu halten und dass die Abstutzfläche (30) gegen die Wirkung der Feder (26) axial in Richtung Ventilsitz (22) verschiebbar ist um den Rand aus der Ringnut (38) zu heben und ihn die Hülse (40) einzuführen damit diese mit der Abstutzfläche (30) verbunden wird, so dass die Gesamtheit der Hülse (40) des Ventils und der Abstutzfläche (30) axial herausgezogen werden kann.

2. Ventil nach Anspruch 1, dadurch gekennzeichnet, dass das Schliessorgan in Form eines Kolbens (18) ausgebildet ist, dessen Stirnfläche aus einem Dichtplättchen (20) besteht und dessen gegenüberliegende Seite mit einer Stange (24) axial durch die auf den Kolben (18) und auf die Abstutzfläche wirkende Feder (26) hindurch verlängert ist.

3. Ventil nach Anspruch 1, dadurch gekennzeichnet, dass die Hülse (40) auf der Seite der Ringnut (38) eine innere vorspringende Rippe (42) aufweist.

4. Ventil nach Anspruch 1 oder 2, dadurch gekennzeichnet, dass der Randbereich der Abstutzfläche radiale Ausschnitte aufweist, welche axial nach aussen umgebogene Lappen (36) bilden um in radialer Richtung eine elastische Flexibilität aufzuweisen.

5. Ventil nach Anspruch 4, dadurch gekennzeichnet, dass die Scheibe (30) eine zentrale Öffnung aufweist mit welcher sie auf die Kolbenstange (24) geschoben ist, wobei der Rand der Öffnung in entgegengesetzter Richtung wie die Lappen (36) axial umgebogen ist.

6. Ventil nach Anspruch 4, dadurch gekennzeichnet, dass das freie Ende der Kolbenstange (24) einen diametralen Anschlag aufweist, welcher den Austritt der Scheibe (30) aus der Stange (24) verhindert.
